**Europäisches Patentamt**

**European Patent Office**

**Office européen des brevets**

(19)

(11) Veröffentlichungsnummer: **0 144 917**
**B1**

(12) **EUROPÄISCHE PATENTSCHRIFT**

(45) Veröffentlichungstag der Patentschrift:
**18.01.89**

(51) Int. Cl.⁴: **B 60 H 1/32**

(21) Anmeldenummer: **84114481.9**

(22) Anmeldetag: **29.11.84**

---

(54) **Klimaanlage.**

---

(30) Priorität: **13.12.83 DE 3344998**

(43) Veröffentlichungstag der Anmeldung:
**19.06.85 Patentblatt 85/25**

(45) Bekanntmachung des Hinweises auf die Patenterteilung:
**18.01.89 Patentblatt 89/3**

(84) Benannte Vertragsstaaten:
**DE FR GB IT**

(56) Entgegenhaltungen:
**DE-A- 3 206 967**
**DE-A- 3 215 997**
**US-A- 3 828 569**
**US-A- 3 872 687**

**PATENT ABSTRACTS OF JAPAN, Band 9, Nr. 60 (M-364)[1783], 16. März 1985**
**AUTOMOBILTECHNISCHE ZEITSCHRIFT, Band 82, Nr. 12, Dezember 1980, Seiten XV-XX, Schwäbisch Gmünd, DE; J. KERN et al.: "Kompressions-Kälteanlagen und mögliche Alternativen für die Klimatisierung von Personenkraftwagen"**
**PATENT ABSTRACTS OF JAPAN, Band 2, Nr. 47 (169)(M-78)**

(73) Patentinhaber: **AUDI AG, Postfach 220, D-8070 Ingolstadt (DE)**

(72) Erfinder: **Pabst, Hans-Georg, Dipl.-Ing., Robert-Koch-Strasse 2, D-8074 Gaimersheim (DE)**

(74) Vertreter: **Le Vrang, Klaus, AUDI AG Postfach 220 Patentabteilung I/EQP, D-8070 Ingolstadt (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Klimaanlage, insbesondere für Fahrzeuge, mit einem Kompressor, welcher beim Einschalten der Klimaanlage mittels einer Kupplung mit seinem Antrieb verbunden wird und wobei Massnahmen getroffen sind, durch welche der Kompressor anfänglich eine verminderte Leistung abgibt.

Wird bei Fahrzeugen mit einer Klimaanlage diese eingeschaltet, dann ist – insbesondere bei Fahrzeugen mit einer geringen Leistung und verstärkt bei Frontantrieb – meist ein Einschaltstoss spürbar. Dieser hat seine Ursache darin, dass durch das Ankuppeln des Kompressors an den ihn treibenden Verbrennungsmotor des Fahrzeugs der Verbrennungsmotor und der mit ihm verbundene Radantrieb durch die hohe Leistungsaufnahme des Kompressors abgebremst wird.

Zur Reduzierung des Einschaltstosses ist es schon bekannt, die Leistung des Kompressors so zu regeln, dass er anfänglich nur eine sehr geringe Leistung aufnimmt. Eine solche Regelung des Kompressors ist sehr aufwendig, insbesondere, wenn der Kompressor wie in den meisten Fällen über eine elektromagnetische Kupplung zuschaltbar ist.

Aus der US-A-3 872 687 ist eine Klimaanlage für Fahrzeuge bekannt, bei der während der Winterzeit das Kältemittel beheizt wird, um das im System befindliche Öl dem Kompressor zuzuleiten, damit dieser nicht mangels Öl Schäden erleiden kann. Da die Beheizung nur während der Winterzeit erfolgen soll, wird der Einschaltstoss während des regulären Betriebs in der Sommerzeit nicht vermieden.

Der Erfindung liegt die Aufgabe zugrunde, mit baulich einfachen Mitteln eine Reduzierung des Einschaltstosses während des normalen Betriebs der Klimaanlage zu erreichen.

Die Aufgabe wird dadurch gelöst, dass bei eingeschalteter Klimaanlge ein definiertes Volumen an Kältemittel vor seinem Eintritt in den Kompressor permanent mit gedrosselter Wärmezufuhr beheizt wird, derart, dass beim Anlaufen des Kompressors nach dem Absaugen des erwärmten Volumens im wesentlichen unerwärmtes Kältemittel angesaugt wird.

Durch die Aufheizung des Kältemittels vor dessen Verdichtung wird das spezifische Gewicht des Kältemittels verringert, was einen niedrigeren Füllungsgrad des Kompressors (schlechterer Wirkungsgrad) zur Folge hat. Bedingt durch die schlechtere Füllung muss der Kompressor eine geringere Leistung aufnehmen, wodurch der Einschaltstoss reduziert wird. Je höher das Kältemittel erwärmt wird, desto geringer ist demnach der Einschaltstoss.

Es ist natürlich möglich, das Kältemittel nur während der Stillstandsphasen des Kompressors zu erwärmen. Vorgeschlagen wird jedoch eine permanente Beheizung des Kältemittels, so dass keine Steuerung notwendig ist. Die Beheizung kann deshalb mit besonders einfachen Mitteln realisiert werden. Neben einer elektrischen Beheizung können auch erwärmtes Kühlwasser, die Auspuffwärme oder die Wärme aus dem Kühlmittelkreislauf nach dem Kompressor für die Erwärmung des angesaugten Kühlmittels herangezogen werden. Durch den gedrosselten Wärmedurchgang wird erreicht, dass bei stehendem Kühlmittel dieses während der Stillstandszeiten des Kompressors ausreichend aufgeheizt wird, bei fliessendem Kühlmittel das Kühlmittel jedoch kaum erwärmt wird, so dass sich nach dem Absaugen des ewärmten Vorrats wieder ein guter Wirkungsgrad im Kältekreis einstellt.

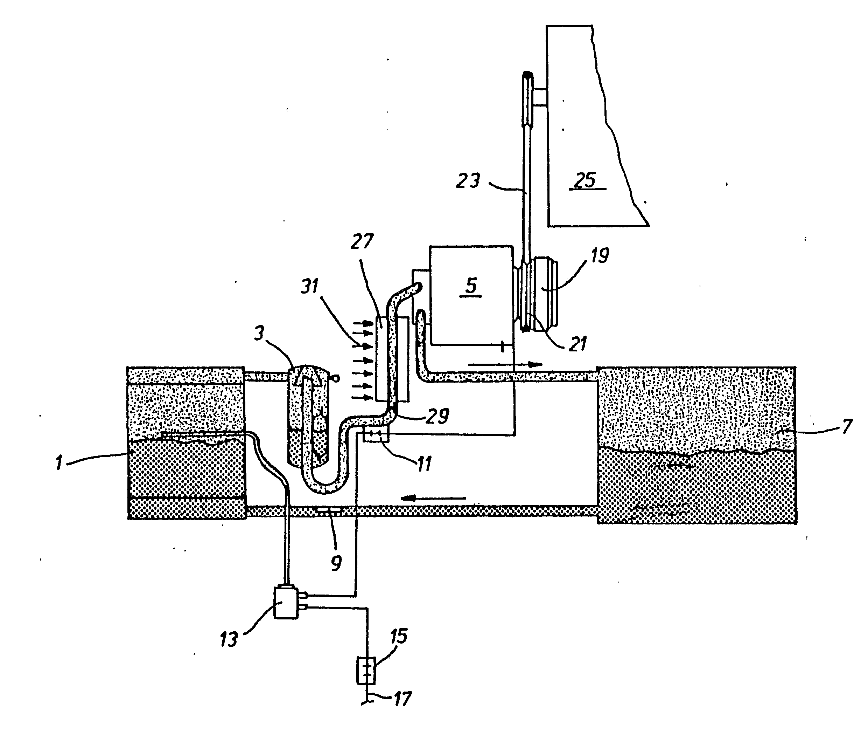

Ein Ausführungsbeispiel der Erfindung ist in der Zeichnung dargestellt und wird nachfolgend näher beschrieben.

Eine schematisch in der Zeichnung dargestellte Klimaanlage eines Fahrzeugs umfasst im wesentlichen einen Verdampfer 1, eine Baueinheit 3, welche als Sammler, Trockner und Flüssigkeitsabscheider ausgebildet ist, einen Kompressor 5, einen Kondensator 7 und eine Entspannungsdrossel 9. Zur Regelung des Kompressors 5 ist ein Niederdruckschalter 11, ein Thermostat 13 und ein Aussentemperatur-Schalter 15 vorgesehen. Die vom Aussentemperatur-Schalter abgehenden Leitungen 17 führen zur Bedieneinheit bzw. zur Stromversorgung (nicht dargestellt).

Der Kompressor 5 trägt auf seiner Antriebswelle eine elektromagnetische Kupplung 19 und eine Riemenscheibe 21, welche beim Einschalten des Kompressors 5 durch die elektromagnetische Kupplung 19 mit der Antriebswelle des Kompressors 5 verbunden wird. Der Antrieb des Kompressors 5 erfolgt über einen Keilriemen 23, welcher die Riemenscheibe 21 ständig antreibt, wenn der mit dem Keilriemen 23 in Wirkverbindung stehende Verbrennungsmotor 25 des Fahrzeugs in Betrieb ist.

Die vorbeschriebene, an sich bekannte Klimaanlage wird erfindungsgemäss durch einen Wärmetauscher 27 ergänzt, durch welchen das Kühlmittel in der Saugleitung 29 des Kühlkreises unmittelbar vor ihrem Eintritt in den Kompressor 5 erwärmbar ist. Die Erwärmung des Kühlmittels erfolgt permanent durch eine gedrosselte Wärmezufuhr, so dass sichergestellt ist, dass nur das ruhende Kühlmittel stärker erwärmt wird, das fliessende Kühlmittel hingegen kaum Wärme aus dem Wärmetauscher 27 aufnimmt. Dadurch ergibt sich folgender Kreislauf bei intermittierendem Betrieb des Kompressors 5:

Vom Kompressor 5 gelangt das Kältemittel über den Kondensator 7, an den es Wärme an die Aussenluft abgibt, zur Entspannungsdrossel 9, von dort zum Verdampfer 1 und dann durch den Wärmetauscher 27 wieder zurück zum Kompressor 5. Während dieser eingeschaltet ist, wird aufgrund des gedrosselten Wärmeübergangs zur Saugleitung 29 das Kältemittel nur geringfügig erwärmt und damit der Wirkungsgrad des Kompressors 5 nicht wesentlich beeinflusst. Während der Stillstandsphasen des Kompressors 5 wird bei eingeschalteter Klimaanlage das Kältemittel in der Saugleitung 29 über die Zeit stärker erwärmt, so dass sein spezifisches Gewicht abnimmt. Schaltet der Kompressor 5 nun wieder ein, dann saugt er zunächst das spezifisch leichtere Kältemittel an, was einen niedrigeren Füllungsgrad des Kompressors 5 und damit einen schlechteren Wirkungsgrad zur Folge hat. Durch diesen erwünschten Effekt wird der Einschaltstoss wesentlich verringert. Nach dem Absaugen des erwärmten Kältemittelvorrats stellt sich wieder ein guter Wirkungsgrad des Kompressors 5 ein, da anschliessend nur geringfügig erwärmtes Kältemittel angesaugt wird.

Die Wärmezufuhr zum Wärmetauscher 27 ist nur durch Pfeile 31 angedeutet, da diese in verschiedenster Weise erfolgen kann. Neben einer elektrischen Beheizung kann auch die Kühlwasserwärme des Verbrennungsmotors 25, dessen Auspuffwärme oder aber auch die Wärme aus dem Kühlmittelkreislauf der Klimaanlage nach dem Kompressor 5 verwendet werden.

## Patentanspruch

Klimaanlage, insbesondere für Fahrzeuge, mit einem Kompressor (5), welcher beim Einschalten der Klimaanlage mittels einer Kupplung (19) mit seinem Antrieb verbunden wird, wobei Massnahmen getroffen sind, durch welche der Kompressor (5) anfänglich eine verminderte Leistung abgibt, dadurch gekennzeichnet, dass bei eingeschalteter Klimaanlage ein definiertes Volumen an Kältemittel (29) vor seinem Eintritt in den Kompressor (5) permanent mit gedrosselter Wärmezufuhr (31) beheizt wird, derart, dass beim Anlaufen des Kompressors (5) nach dem Absaugen des erwärmten Volumens im wesentlichen unerwärmtes Kältemittel angesaugt wird.

## Claim

Air-conditioning plant, in particular for motor vehicles, with a compressor (5) which is connected to its drive by means of a coupling (19) when the air-conditioning plant is switched on and in which measures are taken whereby the compressor (5) initially delivers a reduced output, characterized in that while the air-conditioning plant is switched on a defined volume of coolant (29) is heated permanently, before it enters the compressor (5), with a restricted heat supply (31) in such a way that when the compressor (5) starts up essentially unheated coolant is drawn in after the heated volume has been drawn in.

## Revendication

Installation de conditionnement d'air, en particulier pour véhicules automobiles, avec un compresseur (5) qui est raccordé par un embrayage (19) à son mécanisme d'entraînement lors de la mise en marche de l'installation de conditionnement d'air, des dispositions étant prises pour qu'au démarrage, le compresseur (5) délivre une puissance réduite, caractérisée en ce que lorsque l'installation de conditionnement d'air est en service, un volume défini de caloporteur (29) est réchauffé en permanence avant son entrée dans le compresseur (5), avec un apport de chaleur limité (31), de telle manière que lors de la mise en marche du compresseur (5), du caloporteur pratiquement non réchauffé soit aspiré à la suite de l'aspiration du volume réchauffé.